# EUROPEAN PATENT SPECIFICATION

(11) **EP 1 474 573 B1**
(45) Date of publication and mention of the grant of the patent: **06.06.2007**
(21) Application number: 03706439.1
(22) Date of filing: 06.02.2003
(51) Int. Cl.: E03C 1/04

(54) **MIXED WATER DELIVERY UNIT WITH IMPROVED DELIVERY CONTROL**
MISCHBATTERIE MIT VERBESSERTER ABGABESTEUERUNG
UNITE D'ALIMENTATION EN EAU MITIGEE A COMMANDE DE DEBIT AMELIOREE

(30) Priority: 11.02.2002 IT VI20020025
(43) Date of publication of application: 10.11.2004
(73) Proprietor: CEADESIGN SRL, 36022 Cassola (VI) (IT)
(72) Inventor: MALASORTI, Natalino, I-36060 Casoni di Mussolente (VI) (IT); CERATO, Tiberio, I-36015 Schio (VI) (IT); TESSAROLO, Mario, I-36061 Bassano Del Grappa (VI) (IT)
(74) Representative: Bonini, Ercole
(86) International application number: PCT/EP2003/001168
(87) International publication number: WO 2003/069078

(56) References cited:
- WO-A-99/02906
- DE-U- 9 304 374
- GB-A- 2 075 831
- US-A- 5 944 255

## Description

The present invention is about a mixed water delivery unit with improved .delivery control, especially fit to be employed in sanitary water delivery apparatuses.

It is well known that mixed water delivery units basically consist of a mixer equipped with hot and cold water inlet ways coming from the distribution network, with at least one mixed water outlet way connected to a spout and with a projecting pin, associated to internal mixing devices, connected to an operative handle available to the user.

Such previously described embodiment of the state of the art delivery units, has the inconvenience that the direct connection between the handle and the projecting pin makes the operation not very sensitive and therefore a fine delivery adjustment becomes very difficult.

Document DE 9304374 U describes a mixed water delivery unit comprising a handle for operating a mixer, which handle can be grasped by the user's hand and is connected to a pin which protrudes from the mixer for regulating the delivery of hot or cold water. Said handle is connected to the pin through a couple of gear wheels.

Furthermore in order to assemble the delivery unit in the state of the art embodiments, first the mixer's ways are connected to the terminals of the distribution network and of the delivery device which are built in the wall and thus, once the connection has been carried out, everything is sealed with mortar and the plastering or some other coat is applied.

Once the assembly is completed, the mixer's part that houses the mixing members together with the corresponding pin to which the handle is applied protrudes from the wall.

Those previously described spouts available on the market, have the problem that in the case of a needed substitution of the whole delivery unit or even just the mixer, it is necessary to demolish the wall at the embedding point.

In addition, after the substitution, the recess made in the wall must be sealed with mortar and the plastering or coating must be applied all over again.

It is obvious that such operation forces the user to meet the frequently excessive expenses, taking into consideration the high labor costs charged by the field's technicians.

Furthermore the user must also cope with the hassles caused by the execution of wall demolition operations inside an apartment.

The present invention's object is that of remedying to said inconveniences.

More specifically, a first object of the invention is that of making a mixed water delivery unit which allows adjusting the delivery with greater sensibility.

Another object of the invention is to provide a delivery unit that can be removed and replaced without having to touch the wall structures.

A further object consists in making the delivery unit assembly easier and faster than matching state of the art delivery units.

The above-mentioned objects are accomplished by a mixed water delivery unit which, according to the main claim, comprises the following:
- a mixer having a first hot water inlet way, a second cold water inlet way and a third mixed water outlet way;
- a spout for the distribution of said mixed water;
- a first fitting pipe which connects said first inlet way with a hot water feeding pipe;
- a second fitting pipe which connects said second inlet way with a cold water feeding pipe;
- a third fitting pipe which connects said third outlet way with a pipe connected to said delivery device;
- a handle for operating said mixer, that can be grasped by the user's hand and connected to a pin which protrudes from said mixer and which is mechanically connected to the mixing members found inside said mixer, and that is also characterized in that said handle is connected to said pin through at least one gear, said at least one gear comprising a bevel gear pair consisting of a first conical toothing pinion keyed fixed to the pin of said mixer which meshes with a second conical toothing pinion having a pivot pin which is connected to the handle and supported by a bearing element.

According to a preferred embodiment described hereafter, the gear comprises a bevel gear pair made of a first conical toothing pinion coupled to said mixer's pin which meshes with a second conical toothing pinion having the pivot pin coupled to the handle.

The gear, the mixer and possibly the spout as well, are supported by a single flange from which the handle for the mixer's operation protrudes.

The flange is removably applied for closing a recess made out of a bearing structure wherein the gear, the mixer and the fitting pipes are built in.

The fitting pipes which connect the mixer to the hot and cold water supply network and to the pipe feeding the delivery device are hoses.

In a further embodiment, the flange is removably applied to the opening of a box that houses the gear, the mixer and the fitting pipes and which is also inserted into the recess made out of the bearing structure.

Advantageously, the presence of the gear makes the adjustment more sensible.

Yet more advantageously, the use of the flange which supports the gear, the mixer and the fitting pipes makes the delivery unit disassembly easier because it is no longer necessary to carry out wall demolitions.

Said advantages and objects are achieved thanks to a mixed water delivery unit which is described with reference to the annexed drawing sheets, wherein:
- Figure 1 is an isometric view of the application of the invention's delivery unit;
- Figure 2 is an isometric view of part of the delivery unit of figure 1;
- Figure 3 is a side view of the part of the delivery unit of figure 2;
- Figure 4 is a top view of the part of the delivery unit of figure 2;
- Figure 5 is an enlarged isometric view of the part of the delivery unit of figure 2 during the assembly;
- Figure 6 is an enlarged isometric view of the part of the delivery unit of figure 2 in an operative embodiment during the assembly;
- Figure 7 is an enlarged isometric view of a further operative embodiment of the invention's delivery unit during the assembly; and
- Figure 8 shows an installation variation of an embodiment of the invention's delivery unit.

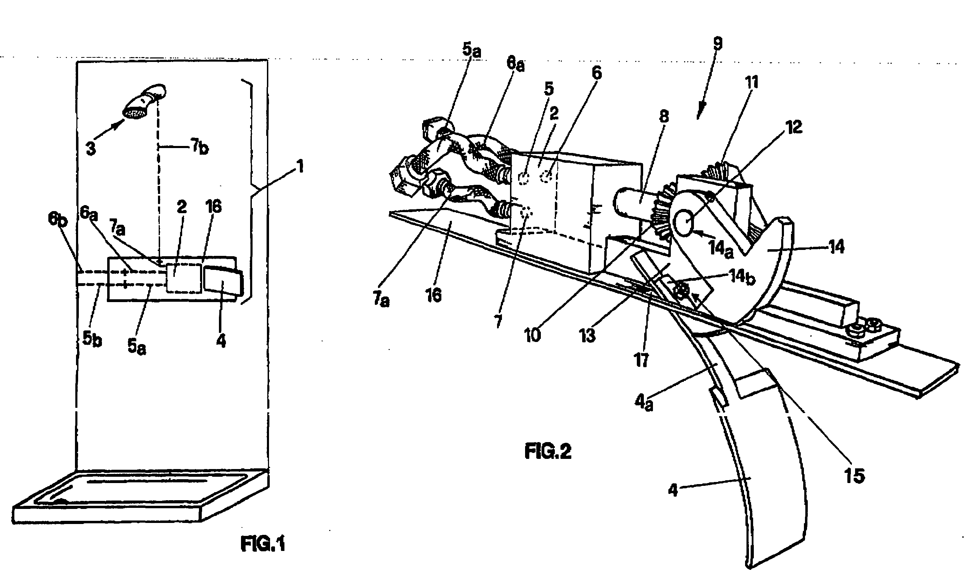

The invention's delivery unit is represented by one of its embodiments as shown in Figure 1 where it is generally indicated with the number **1.**

It must be noticed that the delivery unit essentially comprises a hot and cold water mixer **2,** a mixed water spout **3** hydraulically connected to the mixer **2,** and an operative handle **4** for controlling the delivery.

It is obvious that the spout **3,** in this case represented by a shower head, can be of any type, size or shape.

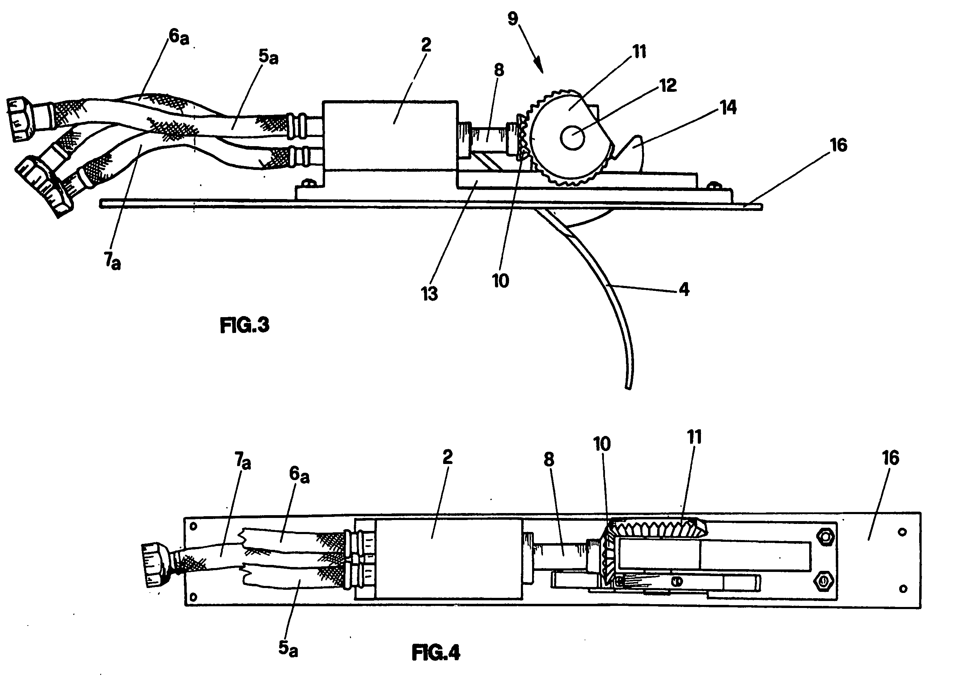

More particularly, it can be seen in figures **2** to **4** that in the mixer **2** there are: a first hot water inlet way **5,** a second cold water inlet way **6,** a third mixed water outlet way **7** and a pin **8** which protrudes from the body of the mixer **2.**

The pin **8** is mechanically connected to the mixing members found inside of the mixer, and a handle **4** is connected to such pin.

It must be specified that the mixer **2** is itself a state of the art component available on the market which, however made of different shapes and sizes, is used by all delivery units of the known kind.

In the specific described case, the mixer has a pin **8** which is made rotate around the longitudinal axis X through the handle **4.**

With reference to the above-mentioned figures, it is described that the first inlet way **5** and the second inlet way **6** are connected through a first fitting pipe **5a** and a second fitting pipe **6a** respectively to a hot water feeding pipe **5b** and to a cold water feeding pipe **6b** which belong to the distribution network of the hydraulic plant. In a similar manner, the third mixed water outlet way **7** is connected through a fitting pipe **7a** to a pipe **7b** connected to the spout **3.**

According to the invention, the operative handle **4** is connected to the pin **8** of the mixer **2** through at least one gear **9.**

The presence of the gear **9** transmits rotation of the handle **4** to the pin **8** with a gear ratio variable with respect to the number of teeth of the gearwheels which make up the gear **9.**

This facilitates a greater delivery control, which is more precise when the gear ratio stepping-down towards the pin **8** is greater.

More particularly, it is described in figures **2** to **4** that the gear **9** comprises a bevel gear pair consisting of a first conical toothing pinion **10** keyed to the pin **8** which meshes with a second conical toothing pinion **11** having a pivot pin **12** mechanically connected to the handle **4** and supported by a bearing element **13** connected to the mixer **2.**

More specifically, the handle **4** is connected to the pin **12** of the second conical gear **11** through a shaped connecting rod **14** which has a through hole **14a** coupling to the pin **12** and to an appendix **14b** that is joined to the handle **4** through a screw **15.**

It is obvious that in a different embodiment the handle **4** and the connecting rod **14** can form a single body and can take up any shape or size.

It is described again in said figures **2** to **4** that the mixer **2,** the gear **9** and the bearing element **13** are connected to a flange **16** wherein a slit **17** is made through which the appendix **14b** of the connecting rod **14** protrudes as well as the appendix **4a** of the handle **4** whereon said flange is applied.

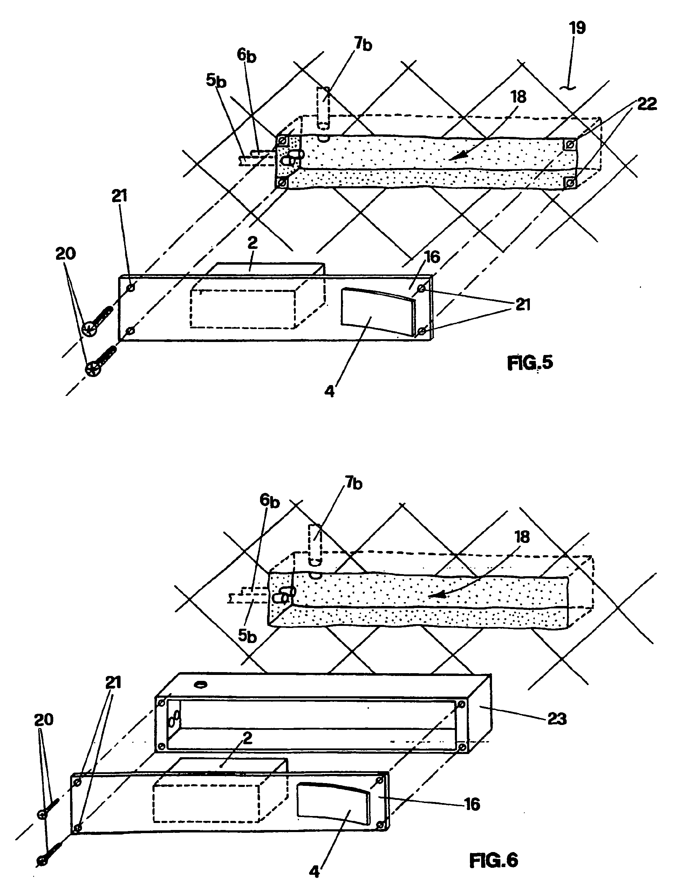

The bearing flange **16,** as shown in figure **5,** is arranged for closing a recess **18** made out of a bearing structure **19,** which houses a built in mixer **2** and the fitting pipes **5a, 6a, 7a,** the gear **9** and the bearing element **13.**

The bearing flange **16** is applied for closing the recess **18** through removable connecting means which comprise screws **20,** each one of them is arranged as a passing through hole **21** made in the bearing flange **16** and it is housed in a matching nut screw **22** found in the recess **18.**

It must be specified that such nut screws **22** can be in stalled inside the recess **18** during its operation.

According to an operative embodiment that is described in figure **6,** the delivery unit **1** comprises also a box **23,** slidably insertable into the recess **18,** wherein the mixer **2,** the fitting pipes **5a, 6a, 7a.** the gear **9** and the bearing element **13** are housed when the bearing flange **16** is arranged for closing the box **23.**

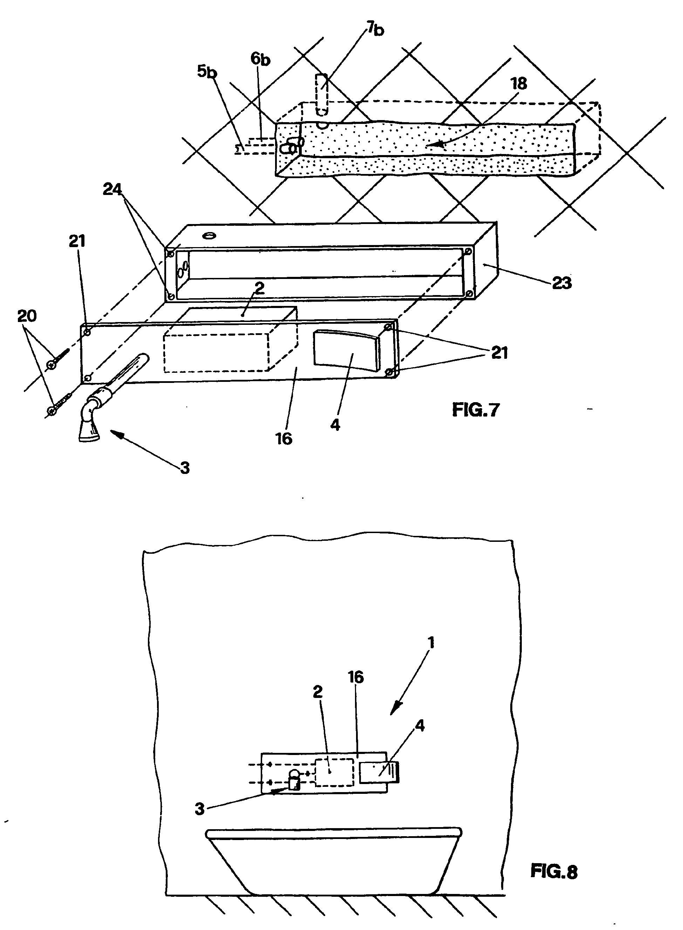

A further operative embodiment is illustrated in figure **7** and differs from the previously described embodiments because the bearing flange **16** supports also the spout **3** which gets fixed to it.

It is clear that such operative embodiment with the spout **3** applied to the flange **16** can provide that the flange were arranged ether for closing the box **23** as described in figure **7.** or for directly closing the recess **18.**

In the case wherein the spout **3** belongs to the bearing flange **16,** an assembly embodiment could be, as an example, that shown in figure **8.**

Based on what has been previously described it seems clear that the invention's delivery unit, in all the presented embodiments, accomplishes the pre-established objects.

As a matter of fact, after having made the recess **18** into the bearing structure **19,** it is enough to link the pipes which connect the mixer **2** to the distribution network and to the spout **3** and thus applying the bearing flange **16** directly to the recess **18** or to a box **23,** in this case before the insertion of the latter into the recess **18.**

Based on what has been described so far, it is thus clear that the invention's spout achieves the pre-established objects.

More specifically, the presence of the gear **9** makes the adjustment more precise because the rotation of the pin **8** which controls the mixer **2** is more easily controllable through the movement of the handle 4.

Furthermore, varying in a proper manner the gear ratio and hence the diameters of the bevel gears **10** and **11** meshed with one another that make up the gear **9,** it is possible to vary the gear ratio and therefore the ratio between the movement of the handle and the angular rotation of the pin **8** of the mixer **2.** In other words, it is possible to link in different ways the extent of the operative handle's movement and the delivery's opening.

Furthermore, the presence of the bearing flange **16** whereon the mixer **2,** the gear **9** and the bearing element **13** are applied, makes the disassembly and the replacement of the delivery unit quicker and less expensive compared to the traditional spouts. As a matter of fact, after the bearing flange **16** has been removed from either the recess **18** or the corresponding box **23,** it is enough to disconnect the flexible pipes in order to carry out the replacement.

Obviously, as previously said, the spout **3** can be of any kind or shape.

In the operative phase, embodiments fit to make both the assembly and the building easier can be applied to the invention's delivery unit.

When said operative embodiments that have not been described or illustrated in the annexed drawings fall within the scope of protection of the following claims, they should be covered by the present patent.

## Claims

1. A mixed water delivery unit (1) comprising:
- a mixer (2) having a first hot water inlet way (5), a second cold water inlet way (6), a third mixed water outlet way (7);
- a spout (3) for the distribution of said mixed water;
- a first fitting pipe (5a) which connects said first way (5) to a hot water feeding pipe (5b);
- a second fitting pipe (6a) which connects said second way (6) to a cold water feeding pipe (6b);
- a third fitting pipe (7a) which connects said third way (7) to a pipe (7b) connected to said spout (3);
- a handle (4) for operating said mixer (2), that can be grasped by the user's hand and connected to a pin (8) which protrudes from said mixer (2) and which is mechanically connected to mixing members found inside said mixer (2), wherein said handle (4) is connected to said pin (8) through at least one gear (9), **characterized in that** said at least one gear (9) comprises a bevel gear pair consisting of a first conical toothing pinion (10) keyed fixed to the pin (8) of said mixer (2) which meshes with a second conical toothing pinion (11) having a pivot pin (12) which is connected to the handle (4) and supported by a bearing element (13).

2. The delivery unit (1) according to claim 1, **characterized in that** said mixer (2) and said at least one gear (9) are applied to a bearing flange (16) from which said handle (4) protrudes, said bearing flange (16) being arranged for closing a recess (18) made out of a bearing structure (19) and fit to house said built in mixer (2), said fitting pipes (5a), (6a), (7a), and said gear (9).

3. The delivery unit (1) according to claim 1, **characterized in that** said handle (4) is connected to said pin (12) through a shaped connecting rod (14) having a through hole (14a) coupling to said pin (12) and to an appendix (14b) which is linked to a matching appendix (4a) of said handle (4) through a screw (15).

4. The delivery unit (1) according to claim 1, **characterized in that** said bearing element (13) is connected to said mixer (2),

5. The delivery unit (1) according to claim 3, **characterized in that** said appendix (4a) of said handle (4) and said appendix (14b) of said shaped connecting rod (14) are arranged passing through a slit (17) made inside said bearing flange (16).

6. The delivery unit (1) according to claim 2, **characterized by** comprising a box (23) which is inserted into said recess (18) and wherein said mixer (2), said fitting pipes (5a), (6a), (7a), and said gear (9) are inserted as well when said bearing flange (16) is arranged for closing said box (23).

7. The delivery unit (1) according to claims 1 or 6, **characterized in that** said fitting pipes (5a), (6a), (7a) are flexible pipes.

8. The delivery unit (1) according to claim 2, **characterized in that** said bearing flange (16) is applied for closing said recess (18) through removable connecting means that comprise screws (20) arranged as passing through holes (21) made in said flange (16) which are coupled into matching nut screws (22) associated to said recess (18).

9. The delivery unit (1) according to claim 6, **characterized in that** said bearing flange (16) is applied for closing said box (23) through removable connecting means that comprise screws (20) arranged as passing through holes (21) made in said flange (16) which are coupled into matching lead screws (24) associated to said box (23).

10. The delivery unit (1) according to any of the previous claims 2 to 9, **characterized in that** said bearing flange (16) is also connected to said spout (3).

## Patentansprüche

1. Eine Wassermischbatterie (1), Folgendes umfassend:
- einen Mischer (2) mit einem ersten Heißwassereinlassweg (5), einem zweiten Kaltwassereinlassweg (6) und einem dritten Mischwasserauslassweg (7);
- eine Tülle (3) zur Ausgabe des gemischten Wassers;
- ein erstes Anschlussrohr (5a), der den ersten Weg (5) mit einer Heißwasserzulaufrohr (5b) verbindet;
- ein zweites Anschlussrohr (6a), der den zweiten Weg (6) mit einer Kaltwasserzulaufrohr (6b) verbindet;
- ein drittes Anschlussrohr (7a), der den dritten Weg (7) mit einem mit der Tülle (3) verbundenen Rohr (7b) verbindet;
- einen Griff (4) zur Bedienung der Mischbatterie (2), der von der Hand des Benutzers ergriffen werden kann und der an einen Bolzen (8) angeschlossen ist, der aus der Mischbatterie (2) herausragt und der mechanisch mit Mischorganen innerhalb der Mischbatterie (2) verbunden ist, wobei der Griff (4) über wenigstens einen Zahnradmechanismus (9) an den Bolzen (8) angeschlossen ist,
**dadurch gekennzeichnet, dass** der wenigstens eine Zahnradmechanismus (9) einen Kegeltrieb umfasst, der aus einem ersten, konischen Zahnritzel (10) besteht, welcher fest am Bolzen (8) des Mischers (2) verkeilt ist, der die Mischung bewirkt mit einem zweiten konischen Zahnritzel (11) mit einem Drehzapfen (12), der am Griff (4) befestigt und durch ein Lagerelement (13) gestützt wird.

2. Die Wassermischbatterie (1) gemäß Patentanspruch 1), **dadurch gekennzeichnet, dass** der Mischer (2) und der wenigstens eine Zahnradmechanismus (9) an einem Lagerflansch (16) befestigt sind, aus dem der Griff (4) herausragt, wobei der Lagerflansch 16) so positioniert ist, dass er eine Aussparung (18) in einer Tragstruktur (19) schließt und geeignet ist, den eingebauten Mischer (2), die Anschlussrohre (5a), (6a), (7a) sowie den Zahnradmechanismus (9) aufzunehmen.

3. Die Wassermischbatterie (1) gemäß Patentanspruch 1), **dadurch gekennzeichnet, dass** der Griff (4) an den Zapfen (12) angeschlossen ist über eine geformte Verbindungsstange (14) mit einer durchgehenden Bohrung (14a), die mit dem Zapfen (12) und einem Ansatz (14b) gekuppelt ist, welcher über eine Schraube (15) mit einem passenden Ansatz (4a) des Griffes (4) verbunden ist.

4. Die Wassermischbatterie (1) gemäß Patentanspruch 1), **dadurch gekennzeichnet, dass** das Lagerelement (13) am Mischer (2) angeschlossen ist.

5. Die Wassermischbatterie (1) gemäß Patentanspruch 3), **dadurch gekennzeichnet, dass** der Ansatz (4a) des Griffes (4) und der Ansatz (14b) der geformten Verbindungsstange (14) so angeordnet sind, dass sie durch einen Schlitz (17) im Lagerflansch (16) verlaufen.

6. Die Wassermischbatterie (1) gemäß Patentanspruch 2), **dadurch gekennzeichnet, dass** sie einen Kasten (23) umfasst, der in die Aussparung (18) eingesetzt ist und in den der Mischer (2), die Anschlussrohre (5a), (6a), (7a) sowie der Zahnradmechanismus (9) ebenfalls eingesetzt sind, wenn der Lagerflansch (16) so angeordnet ist, dass er den Kasten (23) schließt.

7. Die Wassermischbatterie (1) gemäß Patentansprüchen 1) oder 6), **dadurch gekennzeichnet, dass** die Anschlussrohre (5a), (6a), (7a) Schläuche sind.

8. Die Wassermischbatterie (1) gemäß Patentanspruch 2), **dadurch gekennzeichnet, dass** der Lagerflansch (16) zum Schließen der Aussparung (18) angebracht ist mittels abnehmbarer Verbindungsmittel, die Schrauben (20) umfassen, welche so angeordnet sind, dass sie durch Bohrungen (21) in besagtem Flansch (16) hindurch mit passenden, zur Aussparung (18) gehörigen Mutterschrauben (22) gekuppelt werden.

9. Die Wassermischbatterie (1) gemäß Patentanspruch 6), **dadurch gekennzeichnet, dass** der Lagerflansch (16) angeordnet ist zum Schließen des Kastens (23) mittels abnehmbarer Verbindungsmittel, die Schrauben (20) umfassen, welche so angeordnet sind, dass sie durch Bohrungen (21) in besagtem Flansch (16) hindurch mit passenden, zum Kasten gehörigen Mutterschrauben (24) gekuppelt werden.

10. Die Wassermischbatterie (1) gemäß eines jeden der vorstehenden Patentansprüche 2 bis 9, **dadurch gekennzeichnet, dass** der Lagerflansch (16) auch mit der Tülle (2) verbunden ist.

## Revendications

1. Une unité de distribution d'eau mélangée (1) comprenant:
- un mélangeur (2) ayant une première voie (5) d'entrée d'eau chaude, une deuxième voie (6) d'entrée d'eau froide et une troisième voie (7) de sortie d'eau mélangée;
- un distributeur (3) pour la distribution de ladite eau mélangée;
- un premier tuyau de raccordement (5a) qui relie ladite première voie (5) à un tuyau d'amenée (5b) d'eau chaude;
- un deuxième tuyau de raccordement (6a) qui relie ladite deuxième voie (6) à un tuyau d'amenée (6b) d'eau froide;
- un troisième tuyau de raccordement (7a) qui relie ladite troisième voie (7) à un tuyau (7b) relié audit ditributeur (3);
- un levier (4) pour le fonctionnement dudit mélangeur (2), qui peut être saisi par l'utilisateur et relié à un goujon (8) qui saille dudit mélanguer (2) et qui est mécaniquement relié à des éléments de mélange qui se trouvent à l'intérieur dudit mélangeur (2), où ledit levier (4) est relié audit goujon (8) au moyen d'au moins un engrenage (9),
**caractérisée en ce que** ledit au moins un engrenage (9) comprend un couple conique se composant d'un premier pignon à dents coniques (10) assemblé fixement sur le goujon (8) dudit mélangeur (2) qui engrène avec un deuxième pignon à denture conique (11) ayant un goujon de rotation (12) qui est relié au levier (4) et supporté par un élément de soutien (13).

2. L'unité de distribution (1) selon la revendication 1), **caractérisée en ce que** ledit mélangeur (2) et ledit au moins un engrenage (9) sont appliqués à une bride de support (16) de laquelle ledit levier (4) fait saillie, ladite flange de support (16) étant appliquée pour la fermeture d'un creux (18) obtenu d'une structure de support (19) et positionné de façon à loger ledit mélangeur encastré (2), lesdits tuyaux de raccordement (5a), (6a), (7a) et ledit engrenage (9).

3. L'unité de distribution (1) selon la revendication 1), **caractérisée en ce que** ledit levier (4) est relié audit goujon (12) au moyen d'une tige de connexion façonnée (14) présentant un trou passant (14a) se reliant audit goujon (12) et à un appendice (14b) qui est relié à un appendice correspondant (4a) dudit levier (4) au moyen d'une vis (15).

4. L'unité de distribution (1) selon la revendication 1), **caractérisée en ce que** ledit élément de soutien (13) est relié audit mélangeur (2).

5. L'unité de distribution (1) selon la revendication 3), **caractérisée en ce que** ledit appendice (4a) dudit levier (4) et ledit appendice (14b) de ladite tige de connexion façonnée (14) sont positionnés de manière à ce qu'ils passent à travers une fente (17) réalisée à l'intérieur de ladite bride de support (16).

6. L'unité de distribution (1) selon la revendication 2), **caractérisée en ce qu'**elle comprend une boîte (23) qui est insérée dans ledit creux (18) et où ledit mélangeur (2), lesdits tuyaux de raccordement (5a), (6a), (7a) et ledit engrenage (9) sont aussi insérés quand ladite bride de support (16) est positionnée pour la fermeture de ladite boîte (23).

7. L'unité de distribution (1) selon les revendications 1) ou 6), **caractérisée en ce que** lesdits tuyaux de raccordement (5a), (6a), (7a) sont des tuyaux flexibles.

8. L'unité de distribution (1) selon la revendication 2), **caractérisée en ce que** ladite bride de support (16) est appliquée pour la fermeture dudit creux (18) grâce à des moyens de connexion amovibles qui comprennent des vis (20) positionnées de manière à ce qu'elles passent à travers des trous (21) réalisés dans ladite bride (16) qui sont couplés dans des vis-mères correspondantes (22) associées audit creux (18).

9. L'unité de distribution (1) selon la revendication 6), **caractérisée en ce que** ladite bride de support (16) est appliquée pour la fermeture de ladite boîte (23) grâce à des moyens de connexion amovibles qui comprennent des vis (20) positionnées de manière à ce qu'elles passent à travers des trous (21) réalisés dans ladite bride (16) qui sont couplés avec des vis-mères correspondantes (24) associées à ladite boîte (23).

10. L'unité de distribution (1) selon une quelconque des revendications précédentes de 2 à 9, **caractérisée en ce que** ladite bride de support (16) est également reliée audit distributeur (3).
